# EUROPEAN PATENT SPECIFICATION

(11) **EP 2 380 755 B1**
(45) Date of publication and mention of the grant of the patent: **23.10.2013**
(21) Application number: 11162731.1
(22) Date of filing: 15.04.2011
(51) Int. Cl.: B60C 9/00, B60C 9/20, B60C 17/00, D02G 3/48, B60C 9/22

(54) **Overlay ply covering the belt ply for a pneumatic tire**
Gürteldecklage für einen Luftreifen
Nappe recouvrant l'armature de sommet pour pneu

(30) Priority: 26.04.2010 US 767090
(43) Date of publication of application: 26.10.2011
(73) Proprietor: The Goodyear Tire & Rubber Company, Akron, OH 44316-0001 (US)
(72) Inventor: Starinshak, Thomas Walter, Murrells Inlet, SC 29576 (US); Zelin, Michael Gregory, Fayetteville, AR 72703 (US); Kish, James Christopher, Akron, OH 44319 (US); Westgate, Walter Kevin, Uniontown, OH 44685 (US)
(74) Representative: Kutsch, Bernd

(56) References cited:
- EP-A1- 1 431 076
- DE-A1-102006 026 848
- US-A1- 2009 294 009
- US-A1- 2010 065 178

## Description

### Field of the Invention

The present invention is directed towards a runflat or non-runflat pneumatic tire. More specifically, the present invention is directed towards a pneumatic tire wherein an overlay comprises a hybrid cord.

### Background of the Invention

A conventional hybrid cord, for use as an overlay in pneumatic tires, may be formed of two different materials: a low initial modulus core yarn and high modulus wrap yarns. The selection of the yarns is such that the "break point" of the cord (i.e., when the slope of the force versus elongation curve changes from a relatively low slope to a relatively high slope) occurs between 2% - 3% elongation, with an ultimate cord break at over 5% elongation. Another conventional hybrid overlay cord is formed of aramid and nylon twisted together, wherein the break point of the cord occurs between 4% - 6% elongation, with an ultimate cord break at over 10% elongation. In an overlay, the hoop reinforcing effects of a strong cord are desired. However, the hybrid cord must have elongation properties to permit the tire to expand into a toroidal shape during tire molding.

A conventional run-flat tire often has two carcass reinforcing plies and reinforcing wedge inserts in the tire sidewalls. The wedge inserts resist radial deflection of the tire with a combination of compressive and bending stresses in both the inflated, as well as uninflated, conditions. In the uninflated condition, runflat tires experience a net compressive load in the region of the sidewall closest to the road-contacting portion of the tire. The outer portions of the sidewall experience tensile forces while the inner portions of the sidewall undergo compression stresses during bending. The conventional runflat tire balances the necessary flexibility in the inflated condition with the necessary rigidity in the uninflated condition by usually employing two reinforcing carcass plies. The axially outermost ply has cords with a modulus of elasticity that increases with strain. The axially innermost ply has cords with a modulus that exceeds that of the outermost ply during normal loads in an inflated condition. Thus, the innermost ply supports the majority of the load during normal operation, while the outermost ply only support a minority of the load.

When a conventional run-flat tire is operated in an uninflated condition, the load is shifted from the axially innermost ply to the axially outermost ply and again the plies do not equally contribute to the support of the load. The outermost ply thereby does not contribute to the overall rigidity of the tire sidewall during normal operation in the inflated condition.

Another conventional runflat tire has a single carcass ply and at least one insert located adjacent the carcass ply in a sidewall portion. The insert provides support for the tire load to enable the tire to operate in an uninflated condition.

US-A- 2009/0294009 describes a tire in accordance with the preamble of claim 1.

DE-A-10 2006 026 848 describes a hybrid cord comprising a low modulus core and a high modulus wrapping.

US-A- 2010/0065178 and EP-A- 1 431 076 describe hybrid cords for use in pneumatic tires and a pneumatic tire having an overlay reinforcement comprising a hybrid cord.

### Definitions

The following definitions are controlling for the disclosed invention.

"Axial" and "axially" are used herein to refer to lines or directions that are parallel to the axis of rotation of the tire.

"Belt structure" means one or at least two annular layers or plies of parallel cords, woven or unwoven, underlying the tread, unanchored to the bead, and preferably having cords inclined respect to the equatorial plane of the tire. The belt structure may also include plies of parallel cords inclined at relatively low angles, acting as restricting layers.

"Carcass" means the tire structure apart from the belt structure, tread, undertread, and sidewall rubber over the plies, but including the beads. "Circumferential" means lines or directions extending along the perimeter of the surface of the annular tire parallel to the Equatorial Plane (EP) and perpendicular to the axial direction.

"Cord" means one of the reinforcement strands which the plies of a tire or the overlay comprise.

"Cord angle" means the acute angle, left or right in a plan view of the tire, formed by a cord with respect to the equatorial plane. The "cord angle" is measured in a cured but uninflated tire.

"Denier" means the weight in grams per 9000 meters (unit for expressing linear density). Dtex means the weight in grams per 10,000 meters.

"Equatorial plane (EP)" means the plane perpendicular to the tire's axis of rotation and passing through the center of its tread.

"Filament count" means the number of filaments that make up a yarn. Example: 1000 Denier polyester has approximately 190 filaments.

"High Tensile Steel (HT)" means a carbon steel with a tensile strength of at least 3400 Spa @ 0.20 mm filament diameter.

"Lay length" means the distance at which a twisted filament or strand travels to make a 360 degree rotation about another filament or strand.

"Mega Tensile Steel (MT)" means a carbon steel with a tensile strength of at least 4500 Spa @ 0.20 mm filament diameter.

"Normal Tensile Steel (NT)" means a carbon steel with a tensile strength of at least 2800 Spa @ 0.20 mm filament diameter.

"Radial" and "radially" are used to mean directions radially toward or away from the axis of rotation of the tire.

"Super Tensile Steel (ST)" means a carbon steel with a tensile strength of at least 3650 Spa @ 0.20 mm filament diameter.

"Ultra Tensile Steel (UT)" means a carbon steel with a tensile strength of at least 4000 Spa @ 0.20 mm filament diameter.

"Yarn" is a generic term for a continuous strand of textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

### Summary of the Invention

The invention relates to a pneumatic tire in accordance with claim 1.

Dependent claims refer to preferred embodiments of the invention.

A pneumatic tire in accordance with a preferred aspect of the present invention includes a carcass reinforced by a carcass ply, at least one belt ply disposed radially outward of the carcass ply in a crown portion of the pneumatic tire, and at least one overlay ply disposed radially outward of the belt ply in the crown portion of the pneumatic tire. The overlay ply of this tire includes at least one composite cord having at least one core yarn with at least one outer metallic filament wrapped around the core yarn such that the core yarn has a modulus less than a modulus of the second outer metallic filament. The first core yarn has a diameter in the range between 0.3 mm to 0.9 mm inches and a twist in the range between 5-15 TPI. The second outer metallic filament is twisted about the core yarn with a twist between 3-14 TPI.

In accordance with a preferred aspect of the present invention, the first core yarn is selected from the group consisting of: rayon, nylon, polyamide 6 and 6,6, PET, PK, and PEN.

In accordance with another preferred aspect of the present invention, the second outer metallic filament is selected from the group consisting of: Normal, High, Super, Ultra, and Mega tensile steels, stainless steel, titanium alloy, titanium, aluminium and aluminum alloy. The filament diameter may be in the range between 0.04 mm to 0.41 mm.

In accordance with yet another preferred aspect of the present invention, the first core yarn has a linear density value in the range between 240 dtex to 3680 dtex.

In accordance with the present invention, the cord has a structure of core yarn(s) versus outer metallic filaments selected from the group consisting of: 1/1, 1/2, 2/2, 3/2, 1 /3, 2/3, 3/3, and 4/3.

In accordance with yet another preferred aspect of the present invention, the overlay ply has an end count of cord ends per inch in the range between 15 - 32.

In accordance with still another aspect of the present invention, the first core yarn is nylon.

In accordance with yet another preferred aspect of the present invention, the second outer metallic filament is titanium.

In accordance with yet another preferred aspect of the present invention, the tire is a runflat passenger tire.

### Brief Description of the Drawings

The invention will be described by way of example and with reference to the accompanying drawings in which:
FIG. 1 is a schematic representation of cross sectional view of an example tire for use with the present invention; and
FIG. 2 is a schematic representation of an example overlay cord construction in accordance with the present invention.

### Detailed Description of an Example of the Present Invention

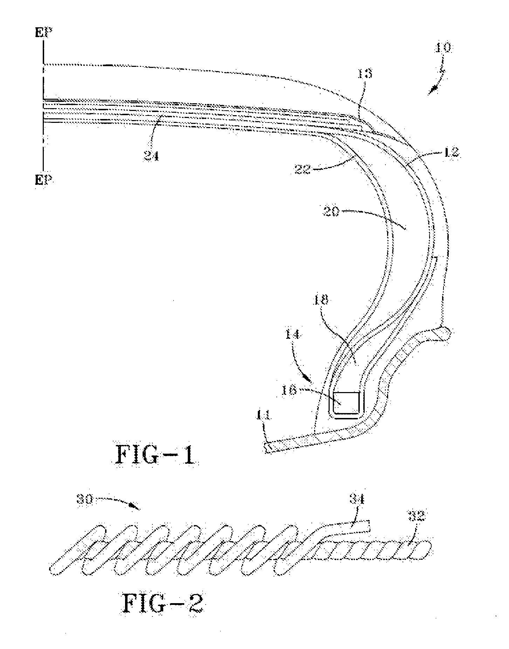

FIG. 1 is a cross-sectional view of an example pneumatic tire 10 for use with the present invention. The example tire 10 is mounted on a tire rim 11, designed to be capable of continued operation during inflated and uninflated conditions. Only one half of the tire 10 is shown, it being understood that the other half is a mirror image of that which is illustrated. The example tire 10 has a single reinforcing carcass ply 12 extending from one bead area 14 of the tire to an opposing bead area (not shown). The ends of the carcass ply 12 are turned axially inward to axially outward about bead cores 16 and bead apexes 18. Terminal ends of the carcass ply 12 extend past radially outer ends of the bead apexes 18 thereby enveloping the bead apexes.

Located in each sidewall region of the example tire 10 is a sidewall insert 20. The sidewall insert 20 may be alternatively disposed adjacent to a tire innerliner 22 (FIG. 1) or axially outward of the carcass ply 12 (not shown). The sidewall insert 20 may be formed of elastomeric material and may extend from a crown area of the example tire 10, from radially inward of a belt reinforcement structure 24 to radially inward of terminal ends of the bead apexes 18. The elastomeric material of the sidewall insert 20, or wedge, may be selected to provide the example tire 10 with support during uninflated, or runflat, operation of the tire.

The belt reinforcement structure 24, disposed radially outward of the carcass ply 12, may have at least two inclined, crossed cord plies. The cords of the inclined plies are inclined with respect to a circumferential direction of the example tire 10. The cords of radially adjacent plies may further be inclined at similar, but opposing, angles to each other.

Outward of the belt reinforcement structure 24 is an overlay 13. The overlay 13 has an axial width greater than a maximum axial width of the crossed cord plies of the belt reinforcement structure 24, thereby encapsulating the crossed cord plies between the overlay 13 and the carcass ply 12. The overlay may be reinforced with cords inclined at angles of 0°- 15° relative to an equatorial plane EP of the example tire 10.

In accordance with the present invention, the overlay 13 may be formed from at least one cord 30 as seen in FIG. 2. The example cord 30 is a composite, or hybrid, cord made of yarns and metallic filaments of appropriate characteristics to provide a runflat or high performance tire, such as the example tire 10. The cord 30 may be formed of at least one low modulus core yarn 32 about which is twisted at least one coated metallic filament 34. The construction of the cord 30 allows the lower modulus core yarn (32 in FIG. 2) of the cord 30 to work at a relatively low strain (i.e., normal operating condition) until the cord has reached a specific allowable elongation. From this point (i.e., an uninflated or high speed inflated condition), the higher modulus outer metallic filament (34 in FIG. 2) may limit the stretch of the cord 30.

Materials for the low modulus core yarn(s) 32 include rayon, nylon polyamide 6 and 6,6, polyethylene terephthalate (PET), polyketone (PK), and polyethylene napthalate (PEN). Materials for the high modulus outer metallic filament(s) include Normal Tensile Steel, High Tensile Steel, Super Tensile Steel, Ultra Tensile Steel, Mega Tensile Steel, titanium, stainless steel, aluminum, and any alloys thereof.

Material selection is based on the desired stress/strain characteristics of the hybrid cord 30 as a whole. However, an important feature is that the outer wrap metallic filament(s) 34 has a Young's modulus at room temperature greater than the core yarn(s) 32. Thus, for example, the outer wrap metallic filament(s) 34 may be Super tensile steel with rayon core yarn(s) or the outer wrap metallic filament(s) may be titanium with polyamide 6 core yarn(s).

The number of low modulus core yarns 32 versus high modulus outer wrap metallic filaments 34 in the cord 30 is either 1/1, 1/2, 2/2, 3/2, 1 /3, 2/3, 3/3 or 4/3. FIG. 2 illustrates a 1/1 construction with a single core yarn 32 and a single outer wrap filament 34.

In the example cord 30, each of the core yarn 32 may be twisted a given number of turns per unit of length, usually expressed in turns per inch (TPI). Additionally, the core yarn 32 and the outer filament 34 may each be twisted together a given number of turns per unit of length (TPI) for the yarns and lay lengths, such as between 3 mm and 25 mm, for the filaments of the cord 30. The direction of twist refers to the direction of slope of the spirals of a yarn, metallic filament, or cord when it is held vertically.

Visually, if the slope of the spirals appears to conform in direction to the slope of a letter "S," then the twist is termed "S" or "left handed." If a slope of the spirals appears to visually conform in direction to the slope of a letter "Z," then the twist is termed "Z" or "right handed." An "S" or "left handed" twist direction is understood to be a direction opposite to a "Z" or "right handed" twist. "Twist" is understood to mean the twist imparted to a yarn or filament/yarn component before the yarn or filament/yarn component is incorporated into a cord. "Cord twist" is understood to mean the twist imparted to two or more yarns and filaments/yarns when twisted together with one another to form the cord. "Dtex" is understood to mean the weight in grams of 10,000 meters of a yarn before the yarn has a twist imparted thereto.

For example, core yarn(s) 32, such as polyester, polyamide (nylon), etc with a diameter of 0.3 mm to 0.9 mm and a twist of 5-15 TPI, may be helically wrapped with metallic filaments(s) 34, such as titanium, stainless steel, with a 50-80 micron metallic or organic coating for adhesion to rubber. The metallic filament(s) may have twists of S, Z, or S & Z, and additional filaments 34 at 3-14 TPI lay lengths. Such a cord 30 in an overlay 13 thus produces good fatigue performance. The overlay target may be a modulus > 5000 MPa at 100°C, 100 % adhesion, and glass transition (tg) > 85°C for a gauge less than 0.22 inches (0.56 mm). The adhesion coating may be materials such as brass, copper, an organic silane, or a Chem-lock metal adhesive from Lord Chemical to improve rubber adhesion.

As stated above, an overlay 13 of hybrid cords 30 in accordance with the present invention produces excellent fatigue performance in a tire 10. This overlay 13 thus enhances the performance of the tire 10, even though the complexities of the structure and behavior of the pneumatic tire are such that no complete and satisfactory theory has been propounded. Temple, Mechanics of Pneumatic Tires (2005). While the fundamentals of classical composite theory are easily seen in pneumatic tire mechanics, the additional complexity introduced by the many structural components of pneumatic tires readily complicates the problem of predicting tire performance. Mayni, Composite Effects on Tire Mechanics (2005). Additionally, because of the non-linear time, frequency, and temperature behaviors of polymers and rubber, analytical design of pneumatic tires is one of the most challenging and underappreciated engineering challenges in today's industry.

A pneumatic tire has certain essential structural elements. United States Department of Transportation, Mechanics of Pneumatic Tires, pages 207-208 (1981). An important structural element is the overlay, typically made up of many flexible, high modulus cords of natural textile, synthetic polymer, glass fiber, or fine hard drawn steel embedded in, and bonded to, a matrix of low modulus polymeric material, usually natural or synthetic rubber. Id. at 207 through 208.

The flexible, high modulus cords are usually disposed as a single layer. Id. at 208. Tire manufacturers throughout the industry cannot agree or predict the effect of different twists of overlay cords on noise characteristics, handling, durability, comfort, etc. in pneumatic tires, Mechanics of Pneumatic Tires, pages 80 through 85.

These complexities are demonstrated by the below table of the interrelationships between tire performance and tire components.

| | LINER | CARCASS PLY | APEX | BELT | OV'LY | TREAD | MOLD |
|---|---|---|---|---|---|---|---|
| | | | | | | | |
| TREADWEAR | | | | X | | X | X |
| NOISE | | X | X | X | X | X | X |
| HANDLING | | X | X | X | X | X | X |
| TRACTION | | | | | | X | X |
| DURABILITY | X | X | X | X | X | X | X |
| ROLL RESIST X | X | | X | X | | X | X |
| RIDE COMFORT | X | X | X | | | X | |
| HIGH SPEED | | X | X | X | X | X | X |
| AIR RETENTION | X | | | | | | |
| MASS X | X | X | X | X | X | X | X |

As seen in the table, overlay cord characteristics affect the other components of a pneumatic tire (i.e., overlay affects apex, belt, carcass ply, etc.), leading to a number of components interrelating and interacting in such a way as to affect a group of functional properties (noise, handling, durability, comfort, high speed, and mass), resulting in a completely unpredictable and complex composite. Thus, changing even one component can lead to directly improving or degrading as many as the above ten functional characteristics, as well as altering the interaction between that one component and as many as six other structural components. Each of those six interactions may thereby indirectly improve or degrade those ten functional characteristics. Whether each of these functional characteristics is improved, degraded, or unaffected, and by what amount, certainly would have been unpredictable without the experimentation and testing conducted by the inventors. Thus, for example, when the structure (i.e., twist, cord construction, etc.) of the overlay cords of a pneumatic tire is modified with the intent to improve one functional property of the pneumatic tire, any number of other functional properties may be unacceptably degraded. Furthermore, the interaction between the overlay cords and the apex, belt, carcass, and tread may also unacceptably affect the functional properties of the pneumatic tire. A modification of the overlay cords may not even improve that one functional property because of these complex interrelationships.

Thus, as stated above, the complexity of the interrelationships of the multiple components makes the actual result of modification of an overlay, in accordance with the present invention, impossible to predict or foresee from the infinite possible results. Only through extensive experimentation have the overlay 13 and cords 30 of the present invention been revealed as an excellent, unexpected option for a tire overlay.

## Claims

1. A pneumatic tire comprising a carcass reinforced by at least one carcass ply (12); at least one belt ply (24) disposed radially outward of the carcass ply (12) in a crown portion of the pneumatic tire (10); and at least one overlay (13) disposed radially outward of the belt ply (24) in the crown portion of the pneumatic tire (10), the overlay (13) comprising at least one composite cord (30) having at least one core filament or core yarn (32) and at least one outer metallic filament (34) wrapped around the at least one core filament or core yarn (32) such that the at least one core filament or core yarn (32) has a Young's modulus at room temperature less than the Young's modulus at room temperature of the at least one outer metallic filament (34), the at least one core filament or core yarn (32) having a diameter in the range of from 0.3 mm to 0.9 mm, alternatively from 0.45 to 0.75 mm, and a twist in the range of from 5 to 15 turns per 2.54 cm (TPI), and the at least one outer metallic filament (34) being twisted about the at least one core filament or core yarn (32) with a twist in the range of from 3 to 14 turns per 2.54 cm (TPI), **characterized in that** the cord (30) has a structure of core yarn(s) (32) versus outer metallic filament(s) (34) selected from the group consisting of 1/1, 1/2, 2/2, 3/2, 1/3, 2/3, 3/3 and 4/3, and that the overlay (13) has an axial width greater than the axial width of the belt ply (24) or the axially widest belt ply (24) thus encapsulating the belt ply (24) between the carcass ply (12) and the overlay (13).

2. The pneumatic tire of claim 1 wherein the at least one core filament or core yarn (32) is selected from the group consisting of: rayon, nylon, polyamide 6, polyamide 6,6, polyethylenterephthalat (PET), polyketone (PK), and polyethylene naphthalate (PEN).

3. The pneumatic tire of claim 1 or 2 wherein the at least one outer metallic filament (34) is selected from the group consisting of: normal tensile steel, high tensile steel, super tensile steel, ultra tensile steel, mega tensile steel, stainless steel, titanium, a titanium alloy, aluminum, and an aluminium alloy.

4. The pneumatic tire of at least one of the previous claims wherein the at least one outer metallic filament (34) has a filament diameter in the range of from 0.04 mm to 0.41 mm, alternately from 0.1 mm to 0.25 mm.

5. The pneumatic tire of at least one of the previous claims wherein the at least one core filament or core yarn (32) has a linear density value in the range of from 240 dtex to 3680 dtex, alternatively from 700 dtex to 2500 dtex or from 1500 dtex to 2000 dtex.

6. The pneumatic tire of at least one of the previous claims wherein the overlay (13) has an end count of cord ends per 2.54 cm in the range of from 15 to 32, alternatively from 20 to 28.

7. The pneumatic tire of at least one of the previous claims wherein the core yarn (32) is nylon and/or the outer metallic filament (34) is titanium.

8. The pneumatic tire of at least one of the previous claims wherein the composite cords (30) in the overlay (13) make an angle in a range of from 0° to 15°, alternatively 0.5° to 5°, with respect to the equatorial plane (EP) of the tire (10).

9. The pneumatic tire of at least one of the previous claims wherein the composite cord (30) consists of a single core yarn (32) and a single outer metallic filament (34).

10. The pneumatic tire of at least one of the previous claims wherein each of the at least one outer metallic filaments is coated with an organic or a metallic coating such as a brass, copper, an organic silane, or an other coating providing an improved adhesion between the filament (34) and a rubber ply material, the coating preferably having a thickness in a range of from 50 µm to 80 µm.

11. The pneumatic tire of at least one of the previous claims wherein the at least one core filament or core yarn (32) has a Young's modulus at room temperature which is at least 50% less, alternatively at least 70% or at least 90% less, than the Young's modulus at room temperature of the at least one outer metallic filament (34).

## Patentansprüche

1. Luftreifen, umfassend eine Karkasse, die mit mindestens einer Karkassenlage (12) verstärkt ist; mindestens eine Gürtellage (24), die radial auswärts von der Karkassenlage (12) in einem Zenitbereich des Luftreifens (10) angeordnet ist; und mindestens eine Gürteldecklage (13), die radial auswärts von der Gürtellage (24) in dem Zenitbereich des Luftreifens (10) angeordnet ist, wobei die Gürteldecklage (13) mindestens einen Verbundwerkstoffkord (30) umfasst, der mindestens ein Kernfilament oder Kerngarn (32) und mindestens ein äußeres metallisches Filament (34) aufweist, das um das mindestens eine Kernfilament oder Kerngarn (32) herumgeschlagen ist, sodass das mindestens eine Kernfilament oder Kerngarn (32) einen Elastizitätsmodul bei Raumtemperatur von weniger als der Elastizitätsmodul bei Raumtemperatur des mindestens einen äußeren metallischen Filaments (34) aufweist, wobei das mindestens eine Kernfilament oder Kerngarn (32) einen Durchmesser im Bereich von 0,3 mm bis 0,9 mm, alternativ von 0,45 bis 0,75 mm, und eine Verdrillung im Bereich von 5 bis 15 Drehungen je 2,54 cm (TPI) aufweist und das mindestens eine äußere Filament (34) mit einer Verdrillung im Bereich von 3 bis 14 Drehungen je 2,54 cm (TPI) um das mindestens eine Kernfilament oder Kerngarn (32) verdrillt ist, **dadurch gekennzeichnet, dass** der Kord (30) eine Struktur von Kerngarn(en) (32) zu äußeren metallischem bzw. metallischen Filament(en) (34) aufweist, ausgewählt aus der aus 1:1, 1:2, 2:2, 3:2, 1:3, 2:3, 3:3 und 4:3 bestehenden Gruppe, und dass die Gürteldecklage (13) eine axiale Breite aufweist, die größer als die axiale Breite der Gürtellage (24) oder der axial breitesten Gürtellage (24) ist, wodurch die Gürtellage (24) zwischen der Karkassenlage (12) und der Gürteldecklage (13) eingekapselt ist.

2. Luftreifen nach Anspruch 1, wobei das mindestens eine Kernfilament oder Kerngarn (32) aus der Gruppe ausgewählt ist, bestehend aus: Rayon, Nylon, Polyamid 6, Polyamid 6,6; Polyethylenterephthalat (PET), Polyketon (PK) und Polyethylennaphthalat (PEN).

3. Luftreifen nach Anspruch 1 oder 2, wobei das mindestens eine äußere metallische Filament (34) aus der Gruppe ausgewählt ist, bestehend aus: Stahl mit normaler Zugfestigkeit, hochfestem Stahl, superhochfestem Stahl, ultrahochfestem Stahl, megahochfestem Stahl, Edelstahl, Titan, einer Titanlegierung, Aluminium und einer Aluminiumlegierung.

4. Luftreifen nach mindestens einem der vorgenannten Ansprüche, wobei das mindestens eine äußere metallische Filament (34) einen Filamentdurchmesser im Bereich von 0,04 mm bis 0,41 mm, alternativ von 0,1 mm bis 0,25 mm aufweist.

5. Luftreifen nach mindestens einem der vorgenannten Ansprüche, wobei das mindestens eine Kernfilament oder Kerngarn (32) einen linearen Dichtewert im Bereich von 240 dtex bis 3.680 dtex, alternativ von 700 dtex bis 2.500 dtex oder von 1.500 dtex bis 2.000 dtex aufweist.

6. Luftreifen nach mindestens einem der vorgenannten Ansprüche, wobei die Gürteldecklage (13) eine Endenzahl von Kordenden je 2,54 cm im Bereich von 15 bis 32, alternativ von 20 bis 28 aufweist.

7. Luftreifen nach mindestens einem der vorgenannten Ansprüche, wobei das Kerngarn (32) Nylon ist und/oder das äußere metallische Filament (34) Titan ist.

8. Luftreifen nach mindestens einem der vorgenannten Ansprüche, wobei die Verbundwerkstoffkorde (30) in der Gürteldecklage (13) einen Winkel in einem Bereich von 0° bis 15°, alternativ 0,5° bis 5°, in Bezug auf die Äquatorebene (EP) des Reifens (10) bilden.

9. Luftreifen nach mindestens einem der vorgenannten Ansprüche, wobei der Verbundwerkstoffkord (30) aus einem einzigen Kerngarn (32) und einem einzigen äußeren metallischen Filament (34) besteht.

10. Luftreifen nach mindestens einem der vorgenannten Ansprüche, wobei jedes der mindestens einen äußeren metallischen Filamente mit einer organischen oder einer metallischen Beschichtung, wie etwa Messing, Kupfer, einem organischen Silan, oder einer anderen Beschichtung, die eine verbesserte Haftung zwischen dem Filament (34) und einem Kautschuklagenmaterial bereitstellt, beschichtet ist, wobei die Beschichtung bevorzugt eine Dicke in einem Bereich von 50 µm bis 80 µm aufweist.

11. Luftreifen nach mindestens einem der vorgenannten Ansprüche, wobei das mindestens eine Kernfilament oder Kerngarn (32) einen Elastizitätsmodul bei Raumtemperatur aufweist, der mindestens 50% weniger, alternativ mindestens 70% oder mindestens 90% weniger beträgt als der Elastizitätsmodul bei Raumtemperatur des mindestens einen äußeren metallischen Filaments (34).

## Revendications

1. Bandage pneumatique comprenant une carcasse renforcée par au moins une nappe de carcasse (12) ; au moins une nappe de ceinture (24) disposée à l'extérieur de la nappe de carcasse (12) en direction radiale dans une portion de sommet du bandage pneumatique (10) ; et au moins un recouvrement (13) disposé à l'extérieur de la nappe de ceinture (24) en direction radiale dans la portion de sommet du bandage pneumatique (10), le recouvrement (13) comprenant au moins un câblé composite (30) possédant au moins un filament de partie centrale ou un fil de partie centrale (32) et au moins un filament métallique externe (34) qui vient s'enrouler autour dudit au moins un filament de partie centrale ou dudit au moins un fil de partie centrale (32), de telle sorte que ledit au moins un filament de partie centrale ou ledit au moins un fil de partie centrale (32) possède un module de Young à la température ambiante qui est inférieur au module de Young à la température ambiante dudit au moins un filament métallique externe (34), ledit au moins un filament de partie centrale ou ledit au moins un fil de partie centrale (32) possédant un diamètre dans la plage de 0,3 mm à 0,9 mm, en variante de 0,45 à 0,75 mm, et une torsion dans la plage de 5 à 15 spires par 2,54 cm (TPI), et ledit au moins un filament métallique externe 34 venant s'enrouler autour dudit au moins un filament de partie centrale ou dudit au moins un fil de partie centrale (32) avec une torsion dans la plage de 3 à 14 spires par 2,54 cm (TPI), **caractérisée en ce que** le câblé (30) possède une structure de fil de câblé (32) par rapport au filament métallique externe (34), choisie parmi le groupe constitué par 1/1, 1/2, 2/2, 3/2, 1/3, 2/3, 3/3 et 4/3 ; et **en ce que** le recouvrement (13) possède une largeur axiale supérieure à la largeur axiale de la nappe de ceinture (24) ou de la nappe de ceinture (24) la plus large en direction axiale, pour ainsi encapsuler la nappe de ceinture (24) entre la nappe de carcasse (12) et le recouvrement (13).

2. Bandage pneumatique selon la revendication 1, dans lequel ledit au moins un filament de partie centrale ou ledit au moins un fil de partie centrale (32) est choisi parmi le groupe constitué par : la rayonne, le nylon, le polyamide 6, le polyamide 6,6, le polyéthylène téréphtalate (PET), la polycétone (PK) et le polyéthylène naphtalate (PEN).

3. Bandage pneumatique selon la revendication 1 ou 2, dans lequel ledit au moins un filament métallique externe (34) est choisi parmi le groupe constitué par : de l'acier à résistance mécanique normale, de l'acier à haute résistance mécanique, de l'acier à ultrahaute résistance mécanique, de l'acier à mégahaute résistance mécanique, de l'acier inoxydable, du titane, un alliage de titane, de l'aluminium et un alliage d'aluminium.

4. Bandage pneumatique selon au moins une des revendications précédentes, dans lequel ledit au moins un filament métallique externe (34) possède un diamètre de filament dans la plage de 0,04 mm à 0,41 mm, en variante de 0,1 mm à 0,25 mm.

5. Bandage pneumatique selon au moins une des revendications précédentes, dans lequel ledit au moins un filament métallique externe (34) possède une valeur de densité linéaire dans la plage de 240 dtex à 3680 dtex, en variante de 700 dtex à 2500 dtex ou de 1500 dtex à 2000 dtex.

6. Bandage pneumatique selon au moins une des revendications précédentes, dans lequel le recouvrement (13) possède un nombre de bouts de câblés par 2,54 cm dans la plage de 15 à 32, en variante de 20 à 28.

7. Bandage pneumatique selon au moins une des revendications précédentes, dans lequel le fil de partie centrale (32) est du nylon et/ou le filament métallique externe (34) est du titane.

8. Bandage pneumatique selon au moins une des revendications précédentes, dans lequel les câblés composites (30) dans le recouvrement (13) forment un angle dans la plage de 0° à 15°, en variante de 0,5° à 5° par rapport au plan équatorial (EP) du bandage pneumatique (10).

9. Bandage pneumatique selon au moins une des revendications précédentes, dans lequel le câblé composite (30) est constitué d'un seul fil de partie centrale (32) et d'un seul filament métallique externe (34) .

10. Bandage pneumatique selon au moins une des revendications précédentes, dans lequel chacun desdits au moins un filament métallique externe est enduit d'un revêtement organique au métallique tel que du laiton, du cuivre, un silane organique ou un autre revêtement en procurant une meilleure adhérence entre le filament (34) et une matière de nappe en caoutchouc, le revêtement possédant de préférence une épaisseur dans la plage de 50 µm à 80 µm.

11. Bandage pneumatique selon au moins une des revendications précédentes, dans lequel ledit au moins un filament de partie centrale ou ledit au moins un fil de partie centrale (32) possède un module de Young à la température ambiante qui est inférieur à concurrence d'au moins 50 %, en variante inférieur à concurrence d'au moins 70 % ou inférieur à concurrence d'au moins 90 % au module de Young à la température ambiante dudit au moins un filament métallique externe (34).
